# EUROPÄISCHE PATENTSCHRIFT

(11) **EP 1 904 343 B1**
(45) Veröffentlichungstag und Bekanntmachung des Hinweises auf die Patenterteilung: **27.02.2013**
(21) Anmeldenummer: 06777535.3
(22) Anmeldetag: 03.07.2006
(51) Int. Cl.: G01D 3/08, G05B 9/03, B60R 16/023

(54) **ELEKTRONISCHE VORRICHTUNG**
ELECTRONIC DEVICE
DISPOSITIF ELECTRONIQUE

(30) Priorität: 21.07.2005 DE 102005034161
(43) Veröffentlichungstag der Anmeldung: 02.04.2008
(73) Patentinhaber: Continental Automotive GmbH, 30165 Hannover (DE)
(72) Erfinder: SCHMID, Dietmar, 65606 Villmar (DE)
(86) Internationale Anmeldenummer: PCT/EP2006/063775
(87) Internationale Veröffentlichungsnummer: WO 2007/009867

(56) Entgegenhaltungen:
- WO-A-2005/001380
- WO-A1-2004/029737
- DE-A1-102004 019 874
- JP-A- 7 172 332
- US-A- 5 291 607

## Beschreibung

Die Erfindung betrifft eine elektronische Vorrichtung, die insbesondere geeignet ist zum Einsetzen in einem Kraftfahrzeug

Elektronikvorrichtungen die beispielsweise ein Sensorelement, wie einen Drehratensensor umfassen, werden zunehmend für sicherheitskritische Anwendungen in Kraftfahrzeugen, wie zum Beispiel im Rahmen eines Fahrdynamik Regelsystems eingesetzt.

Bei derartigen sicherheitskritischen Anwendungen kommt einem zuverlässigen und sicheren Betrieb eine besonders hohe Bedeutung zu.

Aus der WO 2005/001330 ist eine Sicherheitseinrichtung für einen Sensor bekannt. Sie umfaßt eine Funktionssektion, die für einen eigentlichen Betrieb eines Vibrationskreisels und für eine Erzeugung eines an einem Ausgang anstehenden Drehratensignals vorgesehen ist. Sie umfasst einen Mikrocomputer und einen weiteren Mikrocomputer.

Ferner ist eine Kontrollsektion vorgesehen, die weitere Schaltungen zur laufenden Überwachung umfasst. Die Kontrollsektion ist im Wesentlichen von einer Selbstdiagnose durch den Mikrocomputer gebildet. Stellt die Selbstdiagnose einen Fehler fest, so wird über eine ODER-Schaltung und einen Ausgang ein Alarmsignal abgegeben.

Die Druckschrift WO 2004/029737 A1 offenbart eine dem Oberbegriff des Anspruchs 1 entsprechende Steuergeräteanordnung mit bezüglich der Steuerfunktion redundant ausgelegten Steuergeräten mit jeweils einer Versorgungsspannungsquelle, wobei die Steuergeräte durch Entkopplungselemente voneinander entkoppelt sind.

Druckschrift JP 07 - 172 332 A beschreibt eine Einrichtung, die einen ersten Mikroprozessor und einen Backup-Mikroprozessor umfasst, die jeweils eine Spannungsversorgung aufweisen. Der Backup-Mikroprozessor übernimmt die Funktion, wenn ein Fehler, beispielsweise ein Versorgungsspannungsproblem, im ersten Mikroprozessor auftritt.

Aus der DE 102004019874 A1 ist eine Schaltungsanordnung bekannt, die mindestens einen Mikrocomputer enthält. Die Schaltungsanordnung hat eine erste Schaltungsgruppe für eine Basisfunktion und eine zweite Schaltungsgruppe für eine Überwachungsfunktion. Die Basisfunktion ist die Durchführung von Messungen an einem Sensor. Die zweite Schaltungsgruppe ist mit der ersten Schaltungsgruppe verbunden und führt an der ersten Schaltungsgruppe Tests durch. Die zweite Schaltungsgruppe weist einen separaten Ausgang auf, von dem beispielsweise ein Alarmsignal entnehmbar ist.

Die Aufgabe der Erfindung ist es, eine elektronische Vorrichtung zu schaffen, die einen zuverlässigen und sicheren Betrieb ermöglicht.

Die Aufgabe wird gelöst durch die Merkmale des unabhängigen Patentanspruchs. Vorteilhafte Ausgestaltungen der Erfindung sind in den Unteransprüchen gekennzeichnet.

Die Erfindung zeichnet sich aus durch eine elektronische Vorrichtung, die ein erstes Netz umfasst mit einem ersten Mikrocontroller und mit einer ersten Versorgungsspannungsquelle und ein zweites Netz mit einem zweiten Mikrocontroller und einer zweiten Versorgungsspannungsquelle. Entkopplungselemente sind vorgesehen, die zum Entkoppeln der beiden Netze bezüglich Störeinflüsse ausgebildet sind. Auf diese Weise ist es einfach möglich Störeinflüsse, wie beispielsweise Überspannungen in ihrer Wirkung auf das jeweils andere Netz so zu verringern, dass sie sich auf das jeweils andere Netz nicht in kritischer Weise auswirken können. Darüber hinaus können einfach bei geeigneter Ausbildung der elektronischen Vorrichtung beispielsweise Überspannungen in dem jeweils anderen Netz erkannt werden hervorgerufen durch Defekte in der ersten oder zweiten Versorgungsspannungsquelle.

Das zweite Netz ist ausgebildet zum Erkennen eines Fehlers in dem ersten Netz und zum Deaktivieren eines Ausgangs des ersten Netzes und/oder zu einer Fehlersignalisierung, wenn ein Fehler in dem ersten Netz erkannt wurde. So kann einfach sichergestellt werden, dass sich Fehler in dem ersten Netz nicht unerkannt weiter auswirken, so zum Beispiel in einer Steuereinheit, die ein Ausgangssignal der elektronischen Vorrichtung weiter verarbeitet.

Beispielsweise kann es sich bei dem Fehler des ersten beziehungsweise zweiten Netzes um eine Überspannung ausgangsseitig der jeweiligen Versorgungsspannungsquelle handeln.

Korrespondierende vorteile ergeben sich, wenn das erste Netz ausgebildet ist zum Erkennen eines Fehlers in dem zweiten Netz und zum Deaktivieren eines Ausgangs des ersten Netzes und/oder zu einer Fehlersignalisierung, wenn ein Fehler in dem zweiten Netz erkannt wurde.

Gemäß einer vorteilhaften Ausgestaltung der elektronischen Vorrichtung sind die Entkopplungselemente Widerstände. Dies ist besonders einfach und gleichzeitig wirkungsvoll. Die Dimensionierung der Entkopplungselemente kann in diesem Zusammenhang besonders einfach durch Simulationen oder auch sonstige Berechnungen erfolgen, so dass ein maximaler Störeinfluss, so zum Beispiel eine maximale Überspannung in dem jeweiligen anderen Netz, zuverlässig keine Schäden anrichtet.

Erfindungsgemäß ist die elektronische Vorrichtung so ausgebildet, dass der zweite Mikrocontroller auf einem Chip integriert ist mit einem Sensorelement und ausgebildet ist zum Verarbeiten eines Messsignals des Sensorelements. Dies hat den Vorteil, dass der zweite Mikrocontroller so eine Doppelfunktion haben kann und zwar zum Einen ausgebildet ist zum Verarbeiten des Messsignals des Sensorelements und zum Anderen gleichzeitig genutzt wird zum Detektieren von Fehlern in dem jeweils dem ersten Netz.

Gemäß einer weiteren vorteilhaften Ausgestaltung der Erfindung ist dem ersten Netz ein erstes Sensorelement zugeordnet. Das Sensorelement, das mit dem zweiten Mikrocontroller auf einem Chip integriert ist, ist ein zweites, zu dem ersten redundantes, Sensorelement. So kann eine sehr hohe Sicherheit durch die Redundanz der Sensorelement und der ebenfalls redundanten ersten und zweiten Versorgungsspannungsquelle gewährleistet werden.

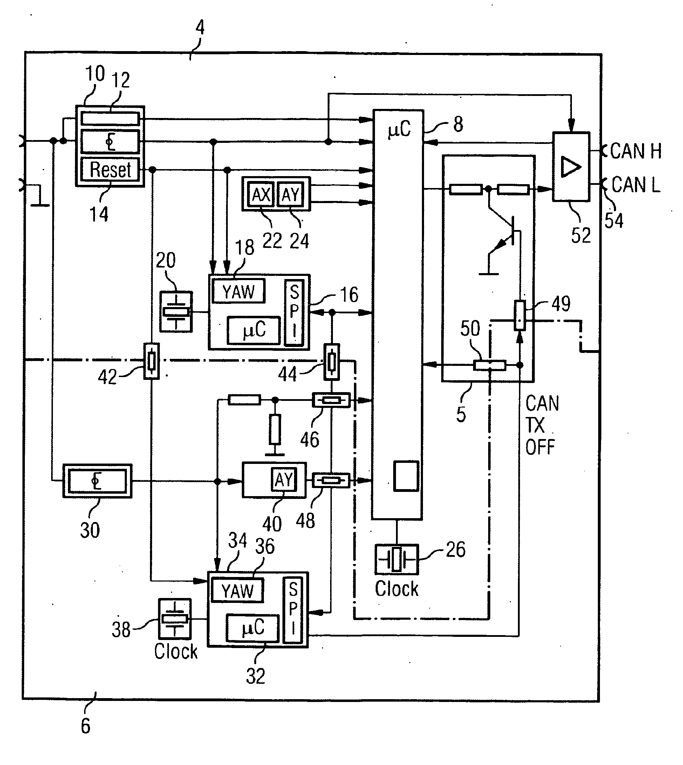

Ausführungsbeispiele der Erfindung sind im Folgenden anhand der schematischen Zeichnungen näher erläutert. Die einzige Figur zeigt eine elektronische Vorrichtung mit einem Versorgungspotenzial-Eingang 1 und einem Bezugspotenzial-Eingang 2. Der Versorgungspotenzial-Eingang 1 ist bei einem Einsatz in einem Kraftfahrzeug bevorzugt gekoppelt mit einer Bordnetz-Spannungsversorgung des Kraftfahrzeugs und somit beispielsweise mit einem 12, 14 oder auch 24 oder 48 Volt Potenzial.

Die elektronische Vorrichtung umfasst ein erstes Netz 4 und ein zweites Netz 6, wobei in der Figur die Trennlinie zwischen dem ersten und dem zweiten Netz 4, 6 durch eine gestrichelte Linie dargestellt ist. Das erste Netz 4 umfasst einen ersten Mikrocontroller 8, der bevorzugt als so genannter Host-Mikrocontroller ausgebildet ist. Der erste Mikrocontroller 8 ist mit einer ersten Versorgungsspannungsquelle 10 des ersten Netzes 4 elektrisch leitend verbunden und wird so von dieser versorgt. Die erste Versorgungsspannungsquelle 10 umfasst ferner bevorzugt eine Niedrigspannungs-Erkennungseinheit 12 und eine Rücksetzeinheit 14. Die Niedrigspannungs-Erkennungseinheit 12 ist ausgebildet zum Erkennen eines vorgegebenen Unterschreitens eines vorgegebenen Spannungsschwellwertes und zum Erzeugen eines entsprechenden Signalisierungssignals, wenn das vorgegebene Unterschreiten eines vorgegebenen Spannungsschwellwertes erkannt wurde. Der erste Mikrocontroller ist sowohl mit der Niedrigspannungs-Erkennungseinheit 12 als auch mit der Rücksetzeinheit 14 gekoppelt. Die Rücksetzeinheit 14 ist ausgebildet zum Erzeugen eines Rücksetzsignals zum Rücksetzen des ersten Mikrocontrollers 8.

Ferner umfasst das erste Netz 4 einen ersten ASIC (Application Specific Integrated Circuit) 16 mit einem ersten Sensorelement 18, und vorzugsweise einem dritten Mikrocontroller und einer Kommunikationsschnittstelle, wie einer SPI (Serial Peripheral Interface)-Schnittstelle. Das erste Sensorelement 18 ist beispielsweise als Drehratensensor mikromechanisch ausgebildet. Bevorzugt ist auch ein Taktgeber 20 vorgesehen, der dem ersten ASIC 16 zugeordnet ist.

Ferner ist bevorzugt ein weiterer Taktgeber 26 vorgesehen, der dem ersten Mikrocontroller 8 zugeordnet ist.

Das erste Netz 4 umfasst ferner Beschleunigungssensoren 22, 24, die beispielsweise ausgebildet sind zum Erfassen einer Längs- beziehungsweise einer Querbeschleunigung des Kraftfahrzeugs.

Darüber hinaus ist dem ersten Netz 4 auch ein Schnittstellentreiber 52 zugeordnet, der ausgebildet ist zum Erzeugen von Signalen die beispielsweise über einen Bus übertragen werden, wie beispielsweise dem CAN (Controller Area Network)-Bus. Zu diesem Zweck umfasst die elektronische Vorrichtung auch einen Ausgang 54. Auf diese Weise kann die elektronische Vorrichtung beispielsweise mit einer Steuereinheit, wie beispielsweise einer Fahrdynamik Regelsystem-Steuereinheit kommunizieren und diese mit Informationen über eine aktuelle Querbeschleunigung, eine aktuelle Längsbeschleunigung oder auch eine aktuelle Drehrate um eine Hochachse des Fahrzeugs zu versorgen.

Die Beschleunigungssensoren 22, 24 sind bevorzugt über entsprechende Analogeingänge mit dem ersten Mikrocontroller 8 elektrisch leitend verbunden. Der erste ASIC 16 ist bevorzugt über seine SPI-Schnittstelle mit einer korrespondierenden SPI-Schnittstelle des ersten Mikrocontrollers verbunden.

.Das zweite Netz 6 umfasst eine zweite versorgungsspannungsquelle 30. Die erste und auch die zweite Versorgungsspannungsquelle 10, 30 sind ausgelegt zum Erzeugen einer für das jeweilige Netz 4, 6 vorgegebenen Versorgungsspannung, so zum Beispiel fünf Volt.

Das zweite Netz umfasst ferner einen zweiten Mikrocontroller 32, der in einem zweiten ASIC 34 integriert ist. Der zweite ASIC 34 umfasst ferner ein zweites Sensorelement 36, das bevorzugt ebenfalls als Drehratensensor ausgebildet ist. Darüber hinaus umfasst das zweite ASIC 34 noch eine Kommunikationsschnittstelle, so beispielsweise die SPI-Schnittstelle, über die es mit dem ersten oder dritten Mikrocontroller kommunizieren kann. Der zweite Mikrocontroller 32 ist ausgebildet zum verarbeiten des Messsignals des zweiten Sensorelements 36 und zum Ausführen von Diagnose- und/oder Überwachungsfunktionen. Dem zweiten ASIC 34 ist ferner noch ein weiterer Taktgeber 38 zugeordnet. Darüber hinaus kann das zweite Netz 6 auch einen weiteren Beschleunigungssensor 40, so zum Beispiel einen weiteren Beschleunigungssensor zum Erfassen der Querbeschleunigung umfassen.

Zum Entkoppeln des ersten Netzes 4 von dem zweiten Netz 6 bezüglich von Störeinflüssen, wie zum Beispiel Überspannungen, sind Entkopplungselemente 42, 44, 46, 48, 49, 50 vorgesehen, die bevorzugt als elektrische Widerstände ausgebildet sind. Sie können jedoch, insbesondere im Falle dynamischer Signale, beispielsweise auch als Kondensatoren ausgebildet sein oder auf andere dem Fachmann bekannte Art und Weise eine Entkopplung bewirken, wie beispielsweise, wenn sie als Optokoppler ausgebildet sind. Die Entkopplungselemente 42, 44, 46, 48 49, 50, sind so ausgelegt, dass sie bei den maximal auftretenden Störeinflüssen eine ausreichende Entkopplung der beiden Netze 4, 6 bewirken, um so sicherzustellen, dass jeweils das andere Netz durch Störeinflüsse des jeweils wiederum anderen Netzes nicht in kritischer Weise beeinflusst wird. Die Störeinflüsse sind beispielsweise Überspannungen, die durch einen Defekt der ersten oder zweiten Versorgungsspannungsquelle 10, 30 hervorgerufen werden können.

So sind die als Widerstände ausgebildeten Entkopplungselemente 42 bis 50 bevorzugt so ausgebildet, dass ein durch sie maximal fließender Strom bei einer maximal in dem jeweiligen anderen Netz anliegenden Spannung durch die jeweils fehlerfrei arbeitende Versorgungsspannungsquelle 10, 30 durch entsprechendes Rücknehmen des von ihr zur Verfügung gestellten Stroms kompensiert werden kann. Die Widerstandswerte der als Widerstände ausgebildeten Entkopplungselemente 42 bis 50 sind bevorzugt durch Simulationen oder sonstige Berechnungen ermittelt. Auf diese Weise kann dann eine Überspannung, hervorgerufen durch einen Defekt einer der Versorgungsspannungsquellen 10, 30 auf das jeweilige Netz 4, 6 begrenzt werden. Ist das erste Netz von einer derartigen Überspannung betroffen, dann bleibt das zweite Netz 6 von der Überspannung geschützt und somit uneingeschränkt funktionsfähig. Umgekehrtes gilt entsprechend.

Bevorzugt ist der zweite Mikrocontroller 32 auch ausgebildet zum Erkennen einer derartigen Störung, beispielsweise durch Erfassen der Versorgungsspannung des ersten Netzes oder auch durch ein Plausibilisieren von Mess- oder Ausgangssignalen des ersten Netzes 4. So kann beispielsweise ein über die SPI-Schnittstelle an den zweiten Mikrocontroller 32 übertragenes Messsignal, das in dem ersten ASIC 16 erzeugt wurde, mit einem korrespondierenden Messsignal, das in dem zweiten ASIC 34 erzeugt wird, verglichen und plausibilisiert werden. Auf diese Weise können Rückschlüsse auf Störungen des ersten Netzes durch den zweiten Mikrocontroller 32 gezogen werden.

Wenn durch den zweiten Mirkocontroller ein Fehler des ersten Netzes 4 erkannt worden ist, kann beispielsweise ein weiteres Senden von Informationen über den Schnittstellentreiber 52, initiiert durch den ersten Mikrocontroller 8, durch den zweiten Mikrocontroller 32 unterbunden werden. Dazu ist dieser bevorzugt mit einer Ausgangsstufe 51 elektrisch leitend verbunden und steuert so beispielsweise die Basis eines Transistors über ein weiteres als Widerstand ausgebildetes Entkopplungselement 49 so an, dass ein weiterer Signaltransfer von dem zweiten Mikrocontroller 32 hin zu dem Schnittstellentreiber 52 unterbunden ist. Auf diese Weise kann sichergestellt werden, dass keine fehlerhaften Informationen beispielsweise über die Drehrate oder die Längs- oder Querbeschleunigung über den CAN-Bus an andere Steuereinheiten, wie die Fahrdynamik Regelsystem-Steuereinheit übertragen werden. Der zweite ASIC 34 kann auch über noch ein weiteres Entkopplungselement 50 mit einem Eingang des ersten Mikrocontrollers 8 elektrisch gekoppelt sein. Alternativ oder zusätzlich kann der zweite Mikrocontroller 32 auch dazu ausgebildet werden, im Falle des Erkennens eines Fehlers an dem ersten Netz, eine Fehlersignalisierung durchzuführen, um so beispielsweise andere Steuereinheiten über den Fehler in dem ersten Netz 4 zu informieren.

Der erste Mikrocontroller 8 ist dazu ausgebildet, die aktuelle versorgungsspannung in dem zweiten Netz 6 zu erfassen. Dazu ist bevorzugt in dem zweiten Netz 6 ein Spannungsteiler vorgesehen, der über das Kopplungselement 46 mit einem Analogeingang des ersten Mikrocontrollers 8 elektrisch gekoppelt ist. Darüber hinaus kann ein Erkennen einer durch Überspannung in dem zweiten Netz 6 hervorgerufenen Störung durch ein Plausibilisieren der Messsignale der Querbeschleunigungssensoren erfolgen, die dem ersten beziehungsweise dem zweiten Netz 4, 6 zugeordnet sind. Dies beruht auf der Tatsache, dass die Messsignale der Beschleunigungssensoren 22, 24,40 typischerweise ratiometrischer Art sind, das heißt dass ihr Signalpegel bei gleicher Beschleunigung abhängt von der jeweiligen Versorgungsspannung.

Alternativ kann des Erkennen der Störung in dem zweiten Netz 6 auch durch den ersten Mikrocontroller 8 dadurch erkannt werden, dass die Messsignale der ersten und zweiten Sensorelemente 18, 36 miteinander plausibilisiert werden. Der erste Mikrocontroller ist bevorzugt dazu ausgebildet, nach Erkennen des Fehlers in dem zweiten Netz 6, bevorzugt eine Fehlersignalisierung durchzuführen und zwar bevorzugt eine entsprechende Fehlersignalisierung der Steuereinheit mitzuteilen, um so gegebenenfalls in einen Notbetrieb überzugehen, oder auch entsprechende Warnsignale an einen Fahrer eines Fahrzeugs auszugeben und aus Sicherheitsgründen gegebenenfalls das Fahrdynamik-Regelsystems zu deaktivieren. Alternativ oder zusätzlich kann der erste Mikrocontroller 8 jedoch auch dazu ausgebildet sein bei erkanntem Fehler in dem zweiten Netz 6 einen entsprechenden Ausgang des zweiten Netzes 6 zu deaktivieren.

Die zweite Versorgungsspannungsquelle 30 muss regelmäßig lediglich für einen geringeren Strombedarf des zweiten Netzes 6 als die erste Spannungsquelle 10 ausgebildet werden. Dadurch ist es möglich, die zweite Spannungsquelle 30 besonders einfach auszubilden, so zum Beispiel als einfachen Längsregler. Durch das Vorsehen derartiger erster und zweiter versorgungsspannungsquellen 10, 30 kann einerseits auch bei sehr hohen Spannungen in dem einen Netz 4,6 sichergestellt werden, dass das andere Netz 4,6 weiterhin mittels der gewünschten Versorgungsspannung durch die jeweilige ihm zugeordnete Versbrgungsspannungsquelle 10, 30 versorgt wird und dass andererseits zum Erreichen der Schutzwirkung keine Komponenten benötigt werden, die eine untere Betriebsspannungsgrenze anheben, was insbesondere bei einem Start einer Brennkraftmaschine des Kraftfahrzeuges vorteilhaft ist. Derartige Komponenten sind beispielsweise Spannungsbegrenzungselemente, wie Zener Dioden, die einen relevanten Spannungsabfall aufweisen.

Alternativ können die Entkopplungselemente beispielsweise auch Kondensatoren umfassen. Darüber hinaus kann ein Überwachen des jeweils anderen Mikroprozessors auch durch das Vorgeben von Test-Rechenoperationen und das Auswerten der gelieferten Ergebnisse erfolgen.

## Patentansprüche

1. Elektronische Vorrichtung für ein Kraftfahrzeug, die ein erstes Netz (4) umfasst mit einem ersten Mikrocontroller (8) und mit einer ersten Versorgungsspannungsquelle (10) und ein zweites Netz (6) mit einem zweiten Mikrocontroller . (32) und mit einer zweiten Versorgungsspannungsquelle (30), wobei Entkopplungselemente (42 - 50) vorgesehen sind, die zum Entkoppeln der beiden Netze (4, 6) bezüglich Störeinflüssen ausgebildet sind, wobei das zweite Netz (6) ausgebildet ist zum Erkennen eines Fehlers in dem ersten Netz (4) und zum Deaktivieren eines Ausgangs (54) des ersten Netzes und/oder zu einer Fehlsignalisierung, wenn ein Fehler in dem ersten Netz (4) erkannt wurde, **dadurch gekennzeichnet, dass**
der zweite Mikrocontroller (32) auf einem Chip integriert ist mit einem Sensorelement und ausgebildet ist zum Verarbeiten eines Messsignals des Sensorelementes, und wobei der zweite Mikrocontroller ausgebildet ist zum Detektieren von Fehlern in dem jeweils ersten Netz.

2. Elektronische Vorrichtung nach Anspruch 1, bei der die Entkopplungselemente (42 - 50) Widerstände sind.

3. Elektronische Vorrichtung nach Anspruch 1 oder 2, bei der dem ersten Netz (4) ein erstes Sensorelement (18) zugeordnet ist, und bei der das Sensorelement, das mit dem zweiten Mirkocontroller (32) auf einem Chip integriert ist, ein zweites, zu dem ersten redundantes, Sensorelement (36) ist.

4. Elektronische Vorrichtung nach einem der vorstehenden Ansprüche, bei der das erste Netz (4) ausgebildet ist zum Erkennen eines Fehlers in dem zweiten Netz (6) und zum Deaktivieren eines Ausgangs des ersten Netzes und/oder zu einer Fehlersignalisierung, wenn ein Fehler an dem zweiten Netz (6) erkannt wurde.

## Claims

1. Electronic apparatus for a motor vehicle which comprises a first network (4), with a first microcontroller (8) and with a first supply voltage source (10), and a second network (6), with a second microcontroller (32) and with a second supply voltage source (30), where decoupling elements (42 - 50) are provided which are designed to decouple the two networks (4, 6) in respect of interfering influences, where the second network (6) is designed to recognize an error in the first network (4) and to deactivate an output (54) of the first network and/or for error signaling when an error has been recognized in the first network (4), **characterized in that** the second microcontroller (32) is integrated on a chip with a sensor element and is designed to process a measurement signal from the sensor element, and where the second microcontroller is designed to detect errors in the respective first network.

2. Electronic apparatus according to Claim 1, in which the decoupling elements (42 - 50) are resistors.

3. Electronic apparatus according to Claim 1 or 2, in which the first network (4) has an associated first sensor element (18), and in which the sensor element which is integrated with the second microcontroller (32) on a chip is a second sensor element (36), which is redundant for the first.

4. Electronic apparatus according to one of the preceding claims, in which the first network (4) is designed to recognize an error in the second network (6) and to deactivate an output of the first network and/or for error signaling when an error has been recognized on the second network (6).

## Revendications

1. Dispositif électronique pour un véhicule automobile qui comprend un premier réseau (4) ayant une première microunité (8) de commande et ayant une première source (10) de tension d'alimentation et un deuxième réseau (6) ayant une deuxième microunité (32) de commande et une deuxième source (30) de tension d'alimentation, dans lequel il est prévu des éléments (42 à 50) de découplage, qui sont constitués pour le découplage des deux réseaux (4, 6) en ce qui concerne des influences parasites, le deuxième réseau (6) étant constitué pour reconnaître un défaut dans le premier réseau (4) et pour désactiver une sortie (54) du premier réseau et/ou pour une signalisation de défaut, si un défaut a été reconnu dans le premier réseau (4), **caractérisé en ce que**
la deuxième microunité (32) de commande est intégrée dans une puce avec un élément (14) et est constituée pour traiter un signal de mesure de l'élément capteur et la deuxième microunité de commande est constituée pour détecter des défauts dans le premier réseau respectif.

2. Dispositif électronique suivant la revendication 1, dans lequel les éléments (42 à 50) de découplage sont des résistances.

3. Dispositif électronique suivant la revendication 1 ou 2, dans lequel un premier élément (18) capteur est associé au premier réseau (4) et dans lequel l'élément capteur qui est intégré dans une puce avec la deuxième microunité (32) de commande est un deuxième élément (36) capteur redondant au premier.

4. Dispositif électronique suivant l'une des revendications précédentes, dans lequel le premier réseau (4) est constitué pour reconnaître un défaut dans le deuxième réseau (6) et pour désactiver une sortie du premier réseau et/ou pour une signalisation de défaut lorsqu'un défaut a été détecté dans le deuxième réseau (6).
